# EUROPÄISCHE PATENTSCHRIFT

(11) **EP 2 858 394 B1**
(45) Veröffentlichungstag und Bekanntmachung des Hinweises auf die Patenterteilung: **05.02.2020**
(21) Anmeldenummer: 14187817.3
(22) Anmeldetag: 06.10.2014
(51) Int. Cl.: H04W 12/04, H04W 12/06, B62H 5/20, B62H 5/00, H04W 4/14, G07C 9/00, H04W 12/12

(54) **Sicherung eines Fortbewegungsmittels gegen unberechtigte Nutzung oder Diebstahl**
Securing a transportation means against unauthorised use or theft
Sécurisation d'un moyen de transport contre l'utilisation non autorisée ou le vol

(30) Priorität: 07.10.2013 DE 102013111087
(43) Veröffentlichungstag der Anmeldung: 08.04.2015
(73) Patentinhaber: Vodafone GmbH, 40549 Düsseldorf (DE)
(72) Erfinder: Hildebrandt, Maik, 45884 Gelsenkirchen (DE); Friedrich, Robin, 45721 Haltern am See (DE)
(74) Vertreter: Ring & Weisbrodt

(56) Entgegenhaltungen:
- EP-A2- 1 281 588
- WO-A1-2013/078561
- WO-A2-2005/057516
- DE-U1-202012 005 611
- US-A1- 2005 239 450

## Beschreibung

Die vorliegende Erfindung betrifft ein Verfahren zur Sicherung eines Fortbewegungsmittels gegen unberechtigte Nutzung oder Diebstahl mittels eines Schlosses und eines in einem Mobilfunknetz betreibbaren Endgerätes.

Gegenstand der Erfindung sind ferner ein Schloss zur Sicherung eines Fortbewegungsmittels gegen unberechtigte Nutzung oder Diebstahl sowie ein zum Betrieb in einem Mobilfunknetz ausgebildetes Endgerät zur Sicherung eines Fortbewegungsmittels gegen unberechtigte Nutzung oder Diebstahl, welche insbesondere zur Ausführung der seitens des Schlosses bzw. der seitens des Endgerätes auszuführenden Verfahrensschritte eines erfindungsgemäßen Verfahrens ausgebildet und/oder eingerichtet sind.

Aus der DE 101 37 579 A1 ist es insbesondere für Anwendungen im Bereich der Vermietung bekannt, ein Fahrrad mit einem elektronischen Codeschloss zu versehen, welches mit einem Öffnungscode zu öffnen und mit einem Verschlusscode zu verschließen ist. Der zur Nutzung des Fahrrades erforderliche Öffnungscode zum Öffnen des Codeschlosses bzw. der erforderliche Verschlusscode zum Schließen des Codeschlosses wird einem Nutzer auf einem von diesem genutzten Mobilfunktelefon mitgeteilt, nachdem dieser zuvor unter Nutzung seines Mobilfunktelefons ein Servicecenter kontaktiert und den Öffnungscode bzw. den Verschlusscode beantragt hat.

Das zur Bereitstellung des Öffnungscodes bzw. des Verschlusscodes des Codeschlosses vorgesehene Servicecenter ist insbesondere aus Gründen der Abrechnung der Vermietung eines Fahrrades vorgesehen und bedingt einen gewissen Aufwand an Personal und Ressourcen, die einer Anwendung im privaten Nutzungsumfeld zur Sicherung eines Fortbewegungsmittels, insbesondere eines Fahrrades, gegen unberechtigte Nutzung oder Diebstahl entgegenstehen. Ferner ist es bei einer Anwendung im privaten Nutzungsumfeld zur Sicherung eines Fortbewegungsmittels, insbesondere eines Fahrrades, gegen unberechtigte Nutzung oder Diebstahl für den Nutzer erforderlich, dass der mit einer Codeeingabe verbundene Eingabeaufwand reduziert ist und Öffnungs- bzw. Schließvorgänge zügig vornehmbar bzw. durchführbar sind. Für viele Nutzer ist zumindest ein Gefühl bzw. Erlebnis der alleinigen und unmittelbaren Verfügungsgewalt über das Schloss erforderlich, insbesondere um ein Nutzungserlebnis zu haben, wie es bei einer Verwendung eines herkömmlichen mechanischen und mit einem Schlüssel betätigbaren Schlosses der Fall ist. Darüber hinaus hinterlässt für zahlreiche Nutzer die Zwischenschaltung eines Servicecenters für Öffnungs- bzw. Schließvorgänge des Schlosses zumindest den Eindruck einer potentiellen Sicherheitslücke als auch den Eindruck einer Überwachung seiner Nutzungen.

Die US 2005/0239450 A1 offenbart ein System für einen sicheren programmierbaren Kommunikator, umfassend eine sichere programmierbare Kommunikationsplattform mit einer umschließenden Struktur, die einen beweglichen Arm umfasst, so dass der Kommunikator sicher an einem Kleidungsstück, einem Rucksack, einer starren Struktur wie einem Fahrrad oder einem Inventargehäuse befestigt werden kann. Die Kommunikationsplattform kann eine Anzeige und einen Speicher umfassen, der eine Bibliothek von Emoticon-Bildelementen enthält, die durch Telekommunikationsmeldungen und oder durch Infrarotlicht ausgetauscht werden können, wodurch Mittel zur Personalisierung der Anzeige und zum Teilen von Emoticons mit ähnlichen Vorrichtungen bereitgestellt werden.

Die WO 2005/057516 A2 offenbart ein Sicherheitssystem, welches vorbestimmte Warnungen erzeugt, indem es in einen Alarmmodus wechselt, wenn es eine außergewöhnliche Bewegung in einem bestimmten Bereich mittels Sensoren erfasst, wobei das Sicherheitssystem ferner eine Zentraleinheit umfasst, die eine mikroprozessorgesteuerte elektronische Karte mit einem GSM-Modem und mindestens einer SIM-Karte aufweist, die von mindestens einer GSM-basierten mobilen Einheit mit mindestens einer

SIM-Karte zwecks Steuerung und Meldung von Warnungen über ein GSM-Netzwerk kommuniziert.

Die EP 1 281 588 A2 offenbart ein Verfahren zum Übertragen eines Öffnungscodes für ein Codeschloss, bei dem: einem Transportmittel ein unterscheidbares Kennzeichen zugeordnet wird; das Transportmittel mit einem Codeschloss versehen wird, welches abhängig von einem Öffnungscode geöffnet werden kann; ein Nutzer des Transportmittels über sein Endgerät eines Mobilfunknetzes eine Verbindung zu einem Diensterbringungsrechner aufbaut; das Kennzeichen über die Verbindung übertragen wird; der Diensterbringungsrechner eine Authentifizierung des Nutzers mit Hilfe der im Mobilfunknetz verfügbaren Verfahren ausführt und nach erfolgreicher Authentifizierung abhängig vom Kennzeichen einen Öffnungscode ermittelt; und der Öffnungscode über die Verbindung zum Endgerät übertragen und ausgegeben wird.

Vor diesem Hintergrund liegt der vorliegenden Erfindung die Aufgabe zugrunde, unter Meidung der vorbeschriebenen Nachteile eine Lösung zur Sicherung eines Fortbewegungsmittels, insbesondere eines Fahrrades, gegen unberechtigte Nutzung oder Diebstahl bereitzustellen, insbesondere für Anwendungen im privaten Nutzungsumfeld.

Zur technischen Lösung wird mit der vorliegenden Erfindung ein Verfahren zur Sicherung eines Fortbewegungsmittels, insbesondere eines Fahrrades, gegen unberechtigte Nutzung oder Diebstahl mittels eines Schlosses und eines in einem Mobilfunknetz betreibbaren Endgerätes, mit den folgenden Verfahrensschritten vorgeschlagen:
a) Empfangen von Daten seitens des Schlosses über das Mobilfunknetz mittels eines Kommunikationsmoduls des Schlosses, wobei die Daten unter Verwendung einer dem Kommunikationsmodul zugeordneten Adressierungsinformation an das Schloss adressiert sind, und wobei die Daten eine Adressierungsinformation eines Endgerätes und eine seitens des Endgerätes gespeicherte Schlüsselinformation umfassen;
b) Auswerten der von dem Kommunikationsmodul empfangenen Daten seitens einer Recheneinrichtung des Schlosses, wobei eine Vergleichseinheit der Recheneinrichtung die Schlüsselinformation der empfangenen Daten mit der in einem Speichermittel des Schlosses erfassten Schlüsselinformation vergleicht;
c) Ausführen eines Steuerbefehls im Falle einer Übereinstimmung der miteinander verglichenen Schlüsselinformationen seitens der Recheneinrichtung;
d) Erstellen einer neuen Schlüsselinformation seitens der Recheneinrichtung des Schlosses mittels einer Generierungseinheit der Recheneinrichtung;
e) Speichern der seitens der Generierungseinheit der Recheneinrichtung des Schlosses erstellten neuen Schlüsselinformation in dem Speichermittel des Schlosses;
f) Senden der neuen Schlüsselinformation von dem Kommunikationsmodul über das Mobilfunknetz unter Verwendung der Adressierungsinformation des Endgerätes an das Endgerät;
g) Speichern der neuen Schlüsselinformation seitens des Endgerätes; und
h) Betätigen des Schlosses basierend auf dem Steuerbefehl durch ein elektromechanisches Mittel zum Ver- bzw. Entriegeln des Schlosses, umfassend
   Verschlüsseln von seitens des Schlosses in Steuerbefehle umsetzbaren Steuerinformationen unter Verwendung der seitens des Endgerätes empfangenen neuen Schlüsselinformation durch das Endgerät,
   Senden der verschlüsselten Steuerinformationen über das Mobilfunknetz an das Schloss, und
   Entschlüsseln der empfangenen verschlüsselten Steuerinformationen unter Verwendung der neuen Schlüsselinformation durch das Schloss.

Der vorliegenden Erfindung liegt die Erkenntnis zugrunde, dass durch das Schloss-seitige Vorsehen eines in einem Mobilfunknetz betreibbaren Kommunikationsmoduls zum Senden und/oder Empfangen von Daten über das Mobilfunknetz und durch das Schloss-seitige Vorsehen einer Recheneinrichtung zur Auswertung, Ausführung und Koordination von Öffnungs- bzw. Schließvorgängen des Schlosses, wobei die Koordination insbesondere das sichere Erstellen und Austauschen von Schlüsselinformationen umfasst, die Zwischenschaltung eines Servicecenters entfallen kann. Mit dem Wegfall eines Servicecenters für Öffnungs- bzw. Schließvorgänge des Schlosses werden damit auch die mit diesem verbundenen und vorbeschriebenen Nachteile beseitigt. Der Nutzer erhält insbesondere das Gefühl bzw. Erlebnis einer alleinigen und unmittelbaren sowie sicheren Verfügungsgewalt über das Schloss.

Eine vorteilhafte Ausgestaltung der Erfindung sieht vor, dass die von dem Kommunikationsmodul des Schlosses zu versendenden Daten verschlüsselt werden und/oder die von dem Endgerät empfangenen Daten verschlüsselt sind, insbesondere mittels einer Streuwertfunktion, vorzugsweise mittels einer Hashfunktion, weiter bevorzugt mittels einer kryptographischen Hashfunktion, oder dergleichen Funktion oder Algorithmus, um die Sicherheit der erfindungsgemäßen Lösung insbesondere vor Manipulationen oder Beeinträchtigungen weiter zu verbessern. Vorteilhafterweise sind die von dem Endgerät empfangenen Daten unter Nutzung der Schlüsselinformation verschlüsselt und werden die von dem Kommunikationsmodul empfangenen Daten seitens der Recheneinrichtung unter Nutzung der Schlüsselinformation entschlüsselt.

Gemäß einem weiteren vorteilhaften Vorschlag der Erfindung ist vorgesehen, dass im Rahmen des Auswertens gemäß Verfahrensschritt b) des erfindungsgemäßen Verfahrens die Recheneinrichtung des Schlosses, vorzugsweise die Vergleichseinheit der Recheneinrichtung, die Adressierungsinformation der empfangenen Daten mit einer in dem Speichermittel des Schlosses erfassten Adressierungsinformation vergleicht, wobei im Falle einer Übereinstimmung der miteinander verglichenen Adressierungsinformationen das erfindungsgemäße Verfahren mit Verfahrensschritt c) fortgesetzt wird. Durch den erfindungsgemäß vorgesehenen Vergleich der Adressierungsinformationen des Absenders der empfangenen Daten mit einer zuvor in dem Speichermittel des Schlosses erfassten Adressierungsinformation wird die Sicherheit der erfindungsgemäßen Lösung weiter verbessert, da so nicht nur die Schlüsselinformationen miteinander verglichen werden, sondern auch die Adressierungsinformationen. Die in dem Speichermittel des Schlosses erfasste Adressierungsinformation kann dabei insbesondere im Rahmen einer ersten Inbetriebnahme bzw. Konfiguration des Schlosses von dem Nutzer des Schlosses hinterlegt werden. Vorteilhafterweise kann der Nutzer des Schlosses dazu mit seinem Endgerät unter Nutzung einer dem Kommunikationsmodul des Schlosses seitens des Mobilfunknetzes zugeordneten Adressierungsinformation eine Nachricht, vorzugsweise eine SMS (SMS: Short Message Service), senden, die die dem Endgerät des Nutzers seitens des Mobilfunknetzes zugeordnete Adressierungsinformation beinhaltet. Die dem Kommunikationsmodul des Schlosses seitens des Mobilfunknetzes zugeordnete Adressierungsinformation erhält der Nutzer beispielsweise beim Erwerb des Schlosses oder von einer vorteilhafterweise nur für die Erstkonfiguration des Schlosses zu kontaktierenden Einrichtung, vorzugsweise über das Mobilfunknetz.

Um die Sicherheit weiter zu verbessern ist die im Speichermittel des Schlosses erfasste Adressierungsinformation des Kommunikationsmoduls des Schlosses vorteilhafterweise mittels eines Schreibschutzes schützbar. Der Schreibschutz ist gemäß einem Vorschlag der Erfindung vorteilhafterweise nur von einer für die Entfernung des Schreibschutzes des Schlosses zu kontaktierenden Einrichtung entfernbar. Vorteilhafterweise ist diese Einrichtung die Einrichtung für die Erstkonfiguration des Schlosses.

Eine weitere vorteilhafte Ausgestaltung der ist dadurch gekennzeichnet, dass im Rahmen der Speicherung gemäß Verfahrensschritt e) des erfindungsgemäßen Verfahrens das Speichermittel eine zuvor erfasste Schlüsselinformation mit der neu erstellten Schlüsselinformation überschreibt. Auf diese Art und Weise wird eine Verbesserung hinsichtlich eines zuverlässigen und sicheren Betriebs des Schlosses erzielt, insbesondere hinsichtlich der Öffnungs- bzw. Schließvorgänge, da dann das Schloss und das Endgerät, letzteres nach Verfahrensschritt f) des erfindungsgemäßen Verfahrens, vorzugsweise nur die für den nächsten Betätigungsvorgang des Schlosses zum Öffnen bzw. zum Schließen desselben erforderliche aktuelle Schlüsselinformation aufweisen.

Gemäß einer weiteren vorteilhaften Ausgestaltung der Erfindung ist vorgesehen, dass die in Verfahrensschritt a) des erfindungsgemäßen Verfahrens mittels des Kommunikationsmoduls des Schlosses empfangenen Daten ferner eine Steuerinformation umfassen, und der in Verfahrensschritt c) des erfindungsgemäßen Verfahrens auszuführende Steuerbefehl von der Recheneinrichtung aus der Steuerinformation erstellt wird. Erfindungsgemäß ist es so für den Nutzer möglich zu bestimmen, wie das Schloss gesteuert werden soll, das heißt insbesondere ob das Schloss geschlossen oder geöffnet werden soll. Darüber hinaus sind vorteilhafterweise weiteren Funktionalitäten des Schlosses mittels entsprechender Steuerbefehle steuerbar, beispielsweise Statusabfragen des Schlosses oder Alarme.

Eine weitere vorteilhafte Ausgestaltung der Erfindung ist gekennzeichnet durch ein Erfassen einer Statusinformation seitens einer Einrichtung des Schlosses und ein Senden der Statusinformation über das Mobilfunknetz an das Endgerät, vorzugsweise im Rahmen des Sendens gemäß Verfahrensschritt f) des erfindungsgemäßen Verfahrens. Vorteilhafterweise umfasst die Statusinformation eine Information einer Einrichtung zur Bestimmung des geographischen Aufenthaltsortes des Schlosses, eine Information einer Einrichtung zur Erkennung von Bewegungen des Schlosses und/oder eine Information einer Einrichtung zur Überwachung einer Manipulation des Schlosses. Eine Manipulation des Schlosses im Sinne der vorliegenden Erfindung umfasst dabei beispielsweise ein Öffnen oder Beschädigen des Gehäuses des Schlosses, ein Durchtrennen eines Sperrriegels des Schlosses oder dergleichen Manipulationen. Mit derartigen Informationen als Bestandteil der Steuerinformation lassen sich erfindungsgemäß weitere vorteilhafte Anwendungen realisieren, insbesondere eine Bestimmung des Aufenthaltsorts des Schlosses und damit des mit dem Schloss vorzugsweise fest versehenen Fortbewegungsmittels, eine Alarmauslösung bei Bewegung und/oder Manipulation des Schlosses, sowie eine Nutzungsprotokollierung hinsichtlich Aufenthaltsorte des Schlosses, Nutzungsdauern des Schlosses oder dergleichen.

Eine weitere vorteilhafte Ausgestaltung der Erfindung ist dadurch gekennzeichnet, dass das Speichermittel des Schlosses zusätzliche Informationen umfasst, insbesondere Informationen hinsichtlich einer IMEI (IMEI: International Mobile Equipment Identity) und/oder einer IMSI (IMSI: International Mobile Subscriber Identity) und/oder einer TMSI (TMSI: Temporary Mobile Subscriber Identity) des Endgerätes. Durch eine Berücksichtigung bzw. Verwendung dieser zusätzlichen Informationen lässt sich die Sicherheit weiter verbessern, insbesondere da weitere miteinander verpaarte Informationen miteinander verglichen werden und so eine umfangreichere Plausibilitätsüberprüfung realisierbar ist. Eine vorteilhafte Ausgestaltung der Erfindung sieht vor, dass im Rahmen des Auswertens gemäß Verfahrensschritt b) des erfindungsgemäßen Verfahrens die Recheneinrichtung, vorzugsweise die Vergleichseinheit der Recheneinrichtung, die zusätzlichen Informationen der in Verfahrensschritt a) des erfindungsgemäßen Verfahrens mittels des Kommunikationsmoduls des Schlosses empfangenen Daten mit den im Speichermittel vorhandenen zusätzlichen Informationen vergleicht, wobei im Falle einer Übereinstimmung der miteinander verglichenen zusätzlichen Informationen das Verfahren mit Verfahrensschritt c) des erfindungsgemäßen Verfahrens fortgesetzt wird.

Zur technischen Lösung der eingangs genannten Aufgabe wird mit der vorliegenden Erfindung ferner vorgeschlagen ein Schloss zur Sicherung eines Fortbewegungsmittels, insbesondere eines Fahrrades, gegen unberechtigte Nutzung oder Diebstahl, mit
einem in einem Mobilfunknetz betreibbaren Kommunikationsmodul,
einem Speichermittel,
einem elektromechanischen Mittel zum Ver- bzw. Entriegeln des Schlosses, und
einer Recheneinrichtung,
wobei
dem Kommunikationsmodul eine Adressierungsinformation zugeordnet ist und dieses dazu ausgebildet ist, über das Mobilfunknetz Daten zu empfangen und an eine Adressierungsinformation zu senden,
das Speichermittel eine erfasste Schlüsselinformation aufweist und dazu ausgebildet bzw. eingerichtet ist, eine erstellte neue Schlüsselinformation abzuspeichern,
das elektromechanische Mittel zum Ver- bzw. Entriegeln dazu ausgebildet bzw. eingerichtet ist, basierend auf einem Steuerbefehl das Schloss zu betätigen, und
die Recheneinrichtung dazu ausgebildet bzw. eingerichtet ist, die von dem Kommunikationsmodul empfangenen Daten, welche eine Adressierungsinformation und eine Schlüsselinformation umfassen, mit der in dem Speichermittel erfassten Schlüsselinformation zu vergleichen, im Falle einer Übereinstimmung der miteinander verglichenen Schlüsselinformationen einen Steuerbefehl auszuführen und eine neue Schlüsselinformation zu erstellen, wobei das Kommunikationsmodul weiter dazu ausgebildet ist, die neue Schlüsselinformation über das Kommunikationsmodul unter Verwendung der Adressierungsinformation an das Endgerät zu senden, wobei das Kommunikationsmodul ferner dazu ausgebildet ist, mittels der neuen Schlüsselinformation verschlüsselte Steuerinformationen vom Endgerät zu empfangen, und die Recheneinrichtung ferner dazu ausgebildet ist, die vom Endgerät empfangenen verschlüsselten Steuerinformationen unter Verwendung der neuen Schlüsselinformation zu entschlüsseln.

Vorteilhafterweise sind die von dem Kommunikationsmodul versendbaren Daten verschlüsselbar sind, insbesondere mittels einer Streuwertfunktion, vorzugsweise mittels einer Hashfunktion, weiter bevorzugt mittels einer kryptographischen Hashfunktion, oder dergleichen Funktion oder Algorithmus, um die Sicherheit des erfindungsgemäßen Schlosses insbesondere vor Manipulationen oder Beeinträchtigungen weiter zu verbessern.

Eine weitere vorteilhafte Ausgestaltung der Erfindung sieht vor, dass seitens der Recheneinrichtung ein Vergleich der Adressierungsinformation empfangener Daten mit einer im Speichermittel erfassten Adressierungsinformation durchführbar ist, und im Falle einer Übereinstimmung der miteinander verglichenen Adressierungsinformationen seitens der Recheneinrichtung ein Steuerbefehl ausführbar ist. Durch den erfindungsgemäß vorgesehenen Vergleich der Adressierungsinformationen des Absenders der empfangenen Daten mit einer zuvor in dem Speichermittel des Schlosses erfassten Adressierungsinformation wird die Sicherheit der erfindungsgemäßen Lösung weiter verbessert, da so nicht nur die Schlüsselinformationen miteinander verglichen werden, sondern auch die Adressierungsinformationen. Die in dem Speichermittel des Schlosses erfasste Adressierungsinformation kann dabei insbesondere im Rahmen einer ersten Inbetriebnahme bzw. Konfiguration des Schlosses von dem Nutzer des Schlosses hinterlegt werden. Vorteilhafterweise kann der Nutzer des Schlosses dazu mit seinem Endgerät unter Nutzung einer dem Kommunikationsmodul des Schlosses seitens des Mobilfunknetzes zugeordneten Adressierungsinformation eine Nachricht, vorzugsweise eine SMS, senden, die die dem Endgerät des Nutzers seitens des Mobilfunknetzes zugeordnete Adressierungsinformation beinhaltet. Die dem Kommunikationsmodul des Schlosses seitens des Mobilfunknetzes zugeordnete Adressierungsinformation erhält der Nutzer beispielsweise beim Erwerb des Schlosses oder von einer vorteilhafterweise nur für die Erstkonfiguration des Schlosses zu kontaktierenden Einrichtung, vorzugsweise über das Mobilfunknetz.

Vorteilhafterweise ist die im Speichermittel erfasste Adressierungsinformation mittels eines Schreibschutzes schützbar, insbesondere um die Sicherheit der erfindungsgemäßen Lösung weiter zu verbessern.

Eine bevorzugte Ausgestaltung der Erfindung ist dadurch gekennzeichnet, dass die dem Kommunikationsmodul und/oder die dem Endgerät zugeordnete Adressierungsinformation eine MSISDN (MSISDN: Mobile Subscriber ISDN Number; ISDN: Integrated Services Digital Network) ist.

Vorteilhafterweise ist die im Speichermittel des Schlosses vorhandene Schlüsselinformation mit der neuen Schlüsselinformation überschreibbar. Hierdurch ist eine Verbesserung hinsichtlich eines zuverlässigen und sicheren Betriebs des Schlosses erzielbar, insbesondere hinsichtlich der Öffnungs- bzw. Schließvorgänge, da dann das Schloss und das Endgerät, letzteres nach Verfahrensschritt f) des erfindungsgemäßen Verfahrens, vorzugsweise nur die für den nächsten Betätigungsvorgang des Schlosses zum Öffnen bzw. zum Schließen desselben erforderliche aktuelle Schlüsselinformation aufweisen.

Eine weitere vorteilhafte Ausgestaltung der Erfindung ist dadurch gekennzeichnet, dass das Schloss eine Einrichtung zur Bestimmung des geographischen Aufenthaltsortes des Schlosses, vorzugsweise ein GPS-Modul (GPS: Global Positioning System) umfassend bzw. aufweisend, eine Einrichtung zur Erkennung von Bewegungen des Schlosses und/oder eine Einrichtung zur Überwachung einer Manipulation des Schlosses aufweist. Mit derartigen Einrichtungen lassen sich weitere Informationen ermitteln und beispielsweise zur Generierung von Steuerbefehlen nutzen, insbesondere um weitere vorteilhafte Anwendungen realisieren zu können, beispielsweise eine Bestimmung des Aufenthaltsorts des Schlosses und damit des mit dem Schloss vorzugsweise fest versehenen Fortbewegungsmittels, eine Alarmauslösung bei Bewegung und/oder Manipulation des Schlosses, sowie eine Nutzungsprotokollierung hinsichtlich Aufenthaltsorte des Schlosses, Nutzungsdauern des Schlosses oder dergleichen. Vorteilhafterweise ist mittels der Einrichtung zur Bestimmung des geographischen Aufenthaltsortes des Schlosses, mittels der Einrichtung zur Erkennung von Bewegungen des Schlosses und/oder mittels der Einrichtung zur Überwachung einer Manipulation des Schlosses eine in einen ausführbaren Steuerbefehl umsetzbare Steuerinformation und/oder eine Statusinformation erstellbar.

Gemäß einer weiteren vorteilhaften Ausgestaltung der Erfindung weist das Schloss eine Energieversorgungseinrichtung auf, vorzugsweise einen Akkumulator, wobei die Energieversorgungseinrichtung vorzugsweise über einen Dynamo und/oder eine Solarvorrichtung aufladbar ist. Im Falle eines Fahrrades als zu sicherndes Fortbewegungsmittel kann der Dynamo vorteilhafterweise im Tretlager des Fahrrades angeordnet sein oder Bestandteil desselben sein. Eine weitere vorteilhafte Ausgestaltung der Erfindung sieht vor, dass das elektromechanische Mittel zum Ver- bzw. Entriegeln des Schlosses mit dem Tretlager des Fahrrades zusammenwirkt, derart, dass im verriegelten Zustand des Schlosses das Tretlager des Fahrrades blockiert ist. Alternative und/oder ergänzende Ausgestaltungen der Erfindung sehen vor, dass das die Lenkung und/oder der Antrieb des Fortbewegungsmittels blockiert werden. Die Blockierung kann dabei mechanisch, elektrisch oder elektromechanisch erfolgen, wozu seitens des Fortbewegungsmittels vorteilhafterweise mit dem elektromechanischen Mittel zum Ver- bzw. Entriegeln des Schlosses zusammenwirkende Mittel vorgesehen sind.

Vorteilhafterweise ist das erfindungsgemäße Schloss ausgebildet und/oder eingerichtet ist, die seitens des Schlosses auszuführenden Verfahrensschritte eines erfindungsgemäßen Verfahrens auszuführen.

Gegenstand der vorliegenden Erfindung ist ferner ein Endgerät zur Sicherung eines Fortbewegungsmittels gegen unberechtigte Nutzung oder Diebstahl, wobei das Endgerät zum Betrieb in einem Mobilfunknetz ausgebildet ist, dem Endgerät eine Adressierungsinformation zugeordnet ist, und das Endgerät ferner dazu eingerichtet ist, Daten, welche eine Adressierungsinformation des Endgerätes und eine Schlüsselinformation umfassen, über das Mobilfunknetz unter Verwendung einer dem erfindungsgemäßen Schloss zugeordneten Adressierungsinformation an das Schloss zu senden und Daten, welche eine seitens des Schlosses mittels einer Generierungseinheit einer Recheneinrichtung des Schlosses erstellte neue Schlüsselinformation enthalten, über das Mobilfunknetz zu empfangen, wobei das Endgerät ferner dazu eingerichtet ist, von seitens des Schlosses in Steuerbefehle umsetzbare Steuerinformationen unter Verwendung der seitens des Endgerätes empfangenen neuen Schlüsselinformation zu verschlüsseln, und die verschlüsselten Steuerinformationen über das Mobilfunknetz an das Schloss zu senden.

Vorteilhafterweise sind die von dem Endgerät versendbaren Daten verschlüsselbar, insbesondere mittels einer Streuwertfunktion, vorzugsweise mittels einer Hashfunktion, weiter bevorzugt mittels einer kryptographischen Hashfunktion, oder dergleichen Funktion oder Algorithmus, um die Sicherheit weiter zu verbessern.

Vorteilhafterweise sind von dem Endgerät die versendbaren Daten unter Nutzung der Schlüsselinformation verschlüsselbar.

Eine weitere bevorzugte Ausgestaltung der Erfindung sieht vor, dass die Adressierungsinformation des Endgerätes eine MSISDN ist.

Gemäß einem weiteren Vorschlag der Erfindung umfassen die von dem Endgerät über das Mobilfunknetz versendbaren Daten eine seitens des erfindungsgemäßen Schlosses in einen Steuerbefehl umsetzbare Steuerinformation und/oder zusätzliche Informationen.

Vorteilhafterweise umfassen die über das Mobilfunknetz seitens des Endgerätes empfangbaren Daten eine Statusinformation des erfindungsgemäßen Schlosses.

Vorteilhafterweise ist das erfindungsgemäße Endgerät ausgebildet und/oder eingerichtet, die seitens des Endgerätes auszuführenden Verfahrensschritte eines erfindungsgemäßen Verfahrens auszuführen.

Weitere Einzelheiten, Merkmale und Vorteile der Erfindung werden nachfolgend anhand der in den Figuren der Zeichnung dargestellten Ausführungsbeispiele näher erläutert. Dabei zeigen:
- Fig. 1: anhand eines Ablaufdiagramms ein prinzipielles Ausführungsbeispiel für eine erstmalige Einrichtung eines erfindungsgemäßen Schlosses und eines erfindungsgemäßen Endgerätes zur Sicherung eines Fortbewegungsmittels gegen unberechtigte Nutzung oder Diebstahl;
- Fig. 2: anhand eines Ablaufdiagramms ein prinzipielles Ausführungsbeispiel für ein erfindungsgemäßes Verfahren zur Sicherung eines Fortbewegungsmittels gegen unberechtigte Nutzung oder Diebstahl; und
- Fig. 3: anhand eines Blockdiagramms ein prinzipielles Ausführungsbeispiel für den Aufbau und die Funktionsweise eines erfindungsgemäßes Schlosses.

Zur Sicherung eines Fortbewegungsmittels, vorliegend einem Fahrrad, gegen unberechtigte Nutzung oder Diebstahl mittels eines Schlosses B und eines in einem Mobilfunknetz betreibbaren Endgerätes eines Nutzers A weist das Schloss B ein in dem Mobilfunknetz betreibbares Kommunikationsmodul auf, mit welchem das Schloss B über das Mobilfunknetz Daten empfangen oder versenden kann. Bei dem Mobilfunknetz handelt es sich vorliegend um ein Mobilfunknetz gemäß einem GSM-, GPRS-, UMTS- und/oder LTE-Funknetzstandard.

Für den Zugang zu dem Mobilfunknetz verwendet das Kommunikationsmodul des Schlosses B ein Mobilfunkteilnehmeridentifikationsmodul, auch SIM genannt (SIM: Subscriber Identity Module). Dem Kommunikationsmodul des Schlosses B ist über das Mobilfunkteilnehmeridentifikationsmodul seitens des Mobilfunknetzes eine eindeutige Adressierungsinformation zugeordnet, vorliegend die Rufnummer MSISDN2 unter der das Kommunikationsmodul des Schlosses B bzw. das Mobilfunkteilnehmeridentifikationsmodul des Kommunikationsmoduls des Schlosses B über das Mobilfunknetz adressierbar bzw. erreichbar ist. Ferner weist das Schloss B ein Speichermittel auf, in welchem eine Schlüsselinformation TC erfasst ist. Die Schlüsselinformation TC ist dabei durch den Hersteller des Schlosses vorgegeben und wird dem Nutzer A beim Kauf des Schlosses B mitgeteilt, beispielsweise mittels eines Schreibens oder einer Bedienungsanleitung des Schlosses B. Um die Sicherheit zu verbessern, kommt ferner eine Streuwertfunktion, beispielsweise ein sogenannter Hash, zum Einsatz, der eine verschlüsselte Schlüsselinformation TC liefert. Dabei wird der Hash des Schlosses B mit einem Algorithmus aus der Schlüsselinformation TC und der Adressierungsinformation MSISDN2 des Schlosses B erzeugt. Der Hash B wird ebenfalls seitens des Speichermittels des Schlosses B erfasst und dem Nutzer A beim Kauf des Schlosses B mitgeteilt.

Bei dem Endgerät des Nutzers A handelt es sich vorliegend um ein in dem Mobilfunknetz betreibbares mobiles Endgerät A. Für den Zugang zu dem Mobilfunknetz verwendet das Endgerät A des Nutzers A ein Mobilfunkteilnehmeridentifikationsmodul, auch SIM genannt (SIM: Subscriber Identity Module). Dem Endgerät A ist über das Mobilfunkteilnehmeridentifikationsmodul seitens des Mobilfunknetzes eine eindeutige Adressierungsinformation zugeordnet, vorliegend die Rufnummer MSISDN1 unter der das Endgerät A bzw. über das Mobilfunknetz adressierbar bzw. erreichbar ist. Ferner weist das Endgerät A oder dessen Mobilfunkteilnehmeridentifikationsmodul ein Speichermittel auf, in welchem eine von dem Nutzer A des Endgerätes A vorgebbare Schlüsselinformation TC' erfasst ist. Um die Sicherheit zu verbessern, kommt ferner eine Streuwertfunktion, beispielsweise ein sogenannter Hash, zum Einsatz, der eine verschlüsselte Schlüsselinformation TC' liefert. Dabei wird der Hash des Endgerätes A mit einem Algorithmus aus der Schlüsselinformation TC' und der Adressierungsinformation MSISDN1 des Endgerätes A erzeugt. Der Hash A wird ebenfalls seitens des Speichermittels des Endgerätes A bzw. dessen Mobilfunkteilnehmeridentifikationsmoduls erfasst.

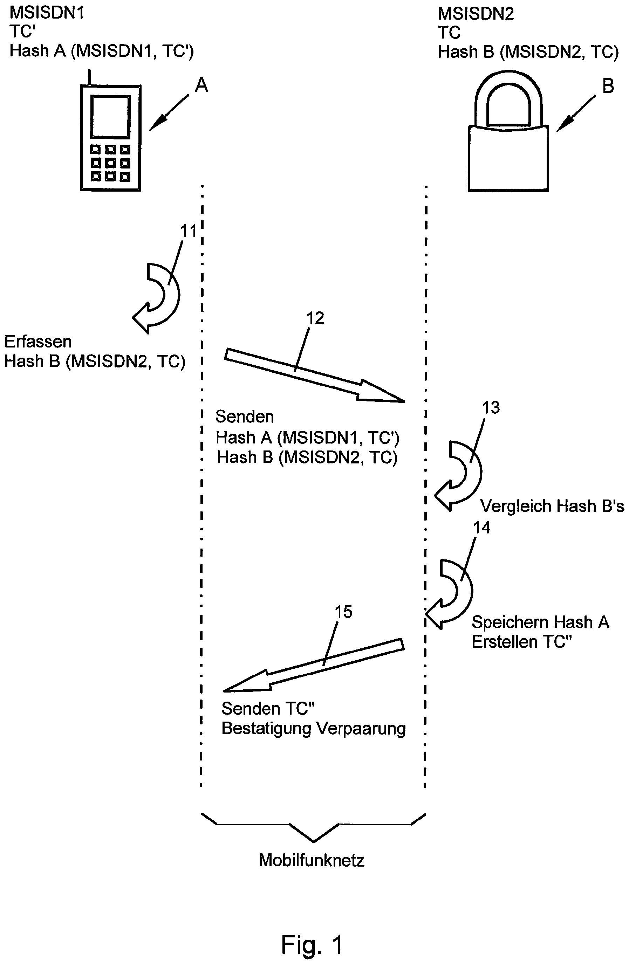

Wie in Fig. 1 dargestellt, erfasst der Nutzer A für eine erstmalige Einrichtung, sogenannte Verpaarung, des Schlosses B und des Endgerätes A seitens seines Endgerätes A den aus der MSISDN2 und der Schlüsselinformation TC des Schlosses B gebildeten Hash B (siehe in Fig. 1 den mit dem Bezugszeichen 11 gekennzeichneten Verfahrensschritt). Die Erfassung des Hash B seitens des Endgerätes A des Nutzers A kann dabei durch manuelle Eingabe oder unter Verwendung eines zweidimensionalen Codes, insbesondere einem sogenannten QR-Code (QR: Quick Response), mittels einer Kamera des Endgerätes A erfolgen. Für letzteres wird der Hash B des Schlosses B dem Nutzer A als QR-Code mitgeteilt bzw. zur Verfügung gestellt.

Anschließend sendet das Endgerät A den aus der MSISDN1 und der Schlüsselinformation TC' des Nutzers A gebildeten Hash A und den aus der MSISDN2 und der Schlüsselinformation TC des Schlosses B gebildeten Hash B unter Verwendung der Adressierungsinformation MSISDN2 des Schlosses B über das Mobilfunknetz an das Schloss B (siehe den in Fig. 1 den mit dem Bezugszeichen 12 gekennzeichneten Verfahrensschritt). Seitens des Schlosses B wird der von dem Endgerät A empfangene Hash B mit dem seitens des Schlosses B gespeicherten Hash B verglichen (siehe den in Fig. 1 den mit dem Bezugszeichen 13 gekennzeichneten Verfahrensschritt). Im Falle einer Übereinstimmung des empfangenen Hash B mit dem gespeicherten Hash B wird dann der Hash A seitens des Schlosses B gespeichert (siehe den in Fig. 1 den mit dem Bezugszeichen 14 gekennzeichneten Verfahrensschritt). Ferner wird seitens des Schlosses B eine neue Schlüsselinformation TC" erstellt (siehe den in Fig. 1 den mit dem Bezugszeichen 14 gekennzeichneten Verfahrensschritt) und diese über das Mobilfunknetz an das Endgerät A gesendet (siehe den in Fig. 1 den mit dem Bezugszeichen 15 gekennzeichneten Verfahrensschritt). Mit dem Senden der neuen Schlüsselinformation TC" von dem Schloss B an das Endgerät A versendet das Schloss B ferner eine Information bzw. eine Nachricht an das Endgerät A, welche dem Nutzer A eine erfolgreiche Verpaarung des Endgerätes A mit dem Schloss B bestätigt (siehe den in Fig. 1 den mit dem Bezugszeichen 15 gekennzeichneten Verfahrensschritt).

Die seitens des Endgerätes A empfangene neue Schlüsselinformation TC" wird seitens des Endgerätes A im Folgenden zur Verschlüsselung von seitens des Schlosses B in Steuerbefehle umsetzbaren Steuerinformationen verwendet, die der Nutzer des Endgerätes A vom Endgerät A aus über das Mobilfunknetz an das Schloss B sendet. Da das Schloss B die Schlüsselinformation TC" kennt, kann das Schloss B die von dem Endgerät A empfangenen Steuerinformationen, welche von dem Endgerät A mit der Schlüsselinformation TC" verschlüsselt wurden, entschlüsseln.

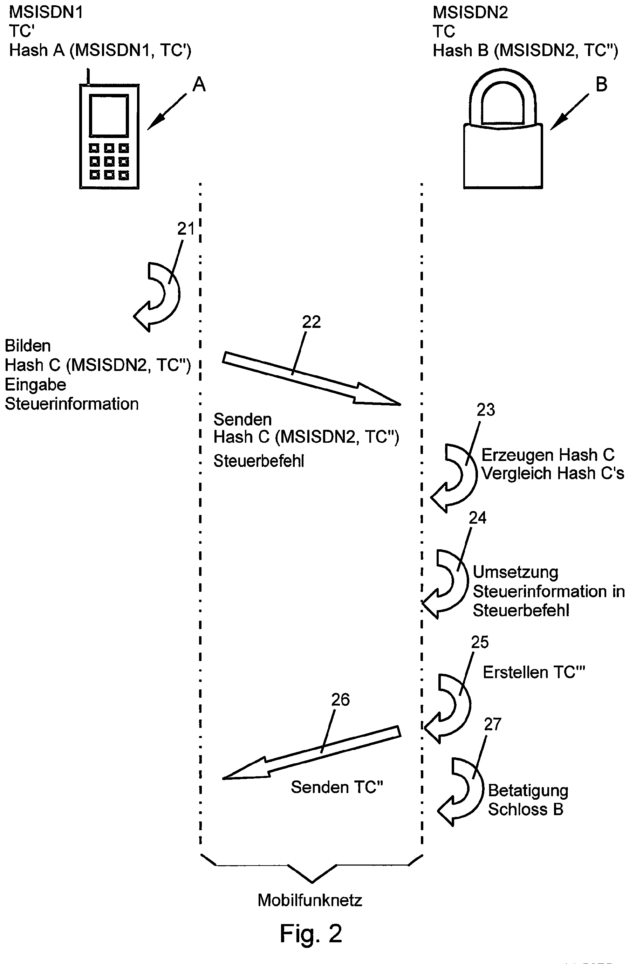

In Fig. 2 ist ein Ausführungsbeispiel für eine nach der Verpaarung des Schlosses B mit dem Endgerät A gemäß Fig. 1 mögliche Nutzung des Schlosses B zur Sicherung eines Fortbewegungsmittels gegen unberechtigte Nutzung oder Diebstahl dargestellt.

Für einen Öffnungs- bzw. Schließvorgang des Schlosses B sendet der Nutzer A des Endgerätes A einen aus der MSISDN2 des Schlosses B und aus der von dem Schloss B empfangenen Schlüsselinformation TC" gebildeten Hash C (siehe den in Fig. 2 den mit dem Bezugszeichen 21 gekennzeichneten Verfahrensschritt) und eine seitens des Schlosses B in einen Steuerbefehl umsetzbare Steuerinformation unter Verwendung der Adressierungsinformation MSISDN2 des Schlosses B über das Mobilfunknetz an das Schloss B (siehe den in Fig. 2 den mit dem Bezugszeichen 22 gekennzeichneten Verfahrensschritt).

Seitens des Schlosses B werden dann die von dem Kommunikationsmodul des Schlosses B empfangenen Daten, die das Endgerät A in dem mit dem Bezugszeichen 22 gekennzeichneten Verfahrensschritt an das Schloss B gesendet hat, von der Recheneinrichtung des Schlosses B ausgewertet (siehe den in Fig. 2 den mit dem Bezugszeichen 23 gekennzeichneten Verfahrensschritt). Dabei vergleicht eine Vergleichseinheit der Recheneinrichtung des Schlosses B den empfangenen, aus der MSISDN2 und der Schlüsselinformation TC" gebildeten Hash C mit einem seitens des Schlosses B aus der eigenen MSISDN2 und der Schlüsselinformation TC" gebildeten Hash C, welcher in dem Speichermittel des Schlosses B gespeichert wird bzw. ist. Im Falle einer Übereinstimmung des seitens des Schlosses B von dem Endgerät A empfangenen Hash C mit dem seitens des Schlosses B bestimmten und gespeicherten Hash C setzt die Recheneinrichtung des Schlosses B die in dem in Fig. 2 mit dem Bezugszeichen 22 gekennzeichneten Verfahrensschritt empfange Steuerinformation in einen Steuerbefehl für ein elektromechanisches Mittel zum Ver- bzw. Entriegeln des Schlosses B um (siehe den in Fig. 2 den mit dem Bezugszeichen 24 gekennzeichneten Verfahrensschritt). Ferner erstellt die Recheneinrichtung des Schlosses B mittels einer Generierungseinheit der Recheneinrichtung des Schlosses B eine neue Schlüsselinformation TC"', welche seitens des Speichermittels des Schlosses gespeichert wird (siehe den in Fig. 2 den mit dem Bezugszeichen 25 gekennzeichneten Verfahrensschritt). Die gespeicherte Schlüsselinformation TC'" wird dann in dem in Fig. 2 mit dem Bezugszeichen 26 gekennzeichneten Verfahrensschritt von dem Schloss B unter Verwendung der Adressierungsinformation MSISDN1 des Endgerätes A mittels des Kommunikationsmoduls des Schlosses B über das Mobilfunknetz an das Endgerät A gesendet. Anschließend veranlasst die Recheneinrichtung des Schlosses B eine Ausführung des in dem in Fig. 2 mit dem Bezugszeichen 24 gekennzeichneten Verfahrensschritt aus der empfangenen Steuerinformation umgesetzten Steuerbefehls, der eine der Steuerinformation bzw. dem Steuerbefehl entsprechende Betätigung des elektromechanischen Mittels zum Ver- bzw. Entriegeln des Schlosses B bewirkt (siehe den in Fig. 2 den mit dem Bezugszeichen 27 gekennzeichneten Verfahrensschritt).

Mit der in Verfahrensschritt 26 von dem Schloss B an das Endgerät A gesendeten neuen Schlüsselinformation TC"' (siehe in Fig. 2 den mit dem Bezugszeichen 26 gekennzeichneten Verfahrensschritt) ist dann eine nächste Betätigung des Schlosses B mittels des Endgerätes A ermöglicht, wobei die Schlüsselinformation TC" aus Verfahrensschritt 21 (siehe in Fig. 2 den mit dem Bezugszeichen 21 gekennzeichneten Verfahrensschritt) dann die Schlüsselinformation TC'" ist mit der das Verfahren gemäß den in Fig. 2 dargestellten Verfahrensschritten 21 bis 27 wiederholt wird.

Bei Vorhandensein von weiteren Sensorik- und/oder Aktorikelementen seitens des Schlosses B, insbesondere einer Einrichtung oder Einheit zur Bestimmung des geographischen Aufenthaltsortes des Schlosses B, vorzugsweise mittels eines GPS-Modules, einer Einrichtung zur Erkennung von Bewegungen des Schlosses B und/oder einer Einrichtung zur Überwachung einer Manipulation des Schlosses B, kann die in Verfahrensschritt 22 von dem Endgerät A an das Schloss B gesendete Steuerinformation, welche seitens des Schlosses B in eine Steuerbefehl umgesetzt wird, auch oder zusätzlich Informationen umfassen, die Auskunft über den Status des Schlosses B bezüglich derartiger Sensorik- und/oder Aktorikelemente umfassen, beispielsweise eine Information die seitens des Schlosses B zur Abfrage der Statusinformation der Sensorik- und/oder Aktorikelemente und deren Übermittlung an das Endgerät umfassen. Ferner können in Verfahrensschritt 2 nach Fig. 2 auch mehrere Steuerinformationen und/oder Statusinformationen von dem Endgerät A über das Mobilfunknetz an das Schloss B gesendet werden, beispielsweise zur Bestimmung des Aufenthaltsortes des Schlosses B, zur Auslösung eines Alarms, insbesondere bei Vorhandensein eines Alarmmelders seitens des Schlosses B, oder dergleichen Informationen.

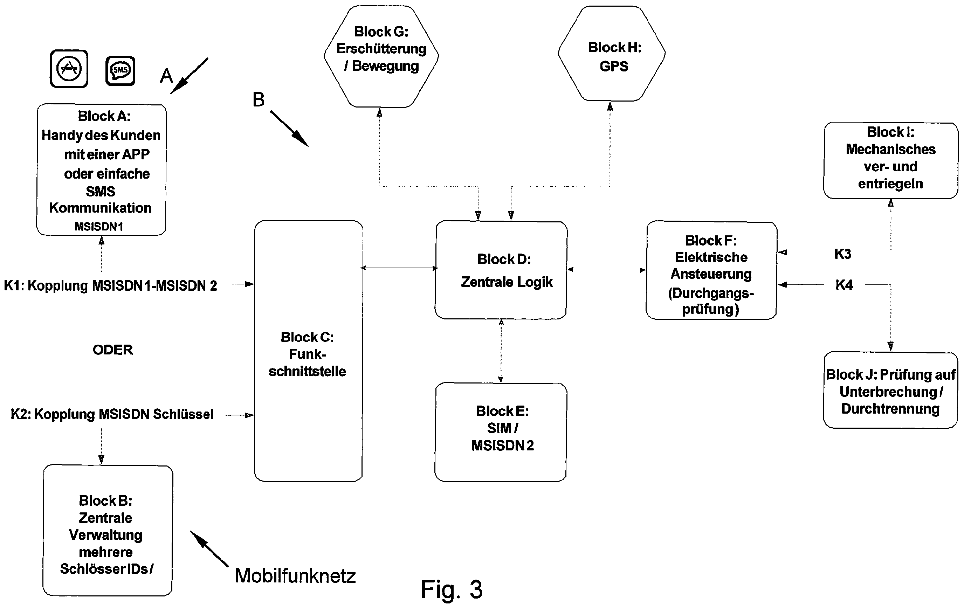

Das Fig. 3 dargestellten Blockdiagramms zeigt ein weiteres Ausführungsbeispiel für ein Schloss B zur Sicherung eines Fortbewegungsmittels gegen unberechtigte Nutzung oder Diebstahl.

Das Schloss B weist auf ein in einem Mobilfunknetz betreibbaren Kommunikationsmodul (Block C: Funkschnittstelle), welches für einen Zugang zu dem Mobilfunknetz ein dem Schloss B zugeordnetes Mobilfunkteilnehmeridentifikationsmodul nutzt (Block E: SIM / MSISDN2), und eine Recheneinrichtung (Block D: Zentrale Logik) mit einer Ansteuerungseinheit für Sensorik- und/oder Aktorikelemente des Schlosses B (Block F: Elektrische Ansteuerung (Durchgangsprüfung)), vorliegend für ein elektromechanisches Mittel zum Ver- bzw. Entriegeln des Schlosses (Block I: Mechanisches ver- und entriegeln) und eine Einrichtung zur Überwachung einer Manipulation des Schlosses B (Block J: Prüfung auf Unterbrechung / Durchtrennung)). Ferner weist das Schloss B eine Einrichtung zur Bestimmung des geographischen Aufenthaltsortes des Schlosses B auf, vorliegend ein GPS-Modul (Block H: GPS), als auch eine Einrichtung zur Erkennung von Bewegungen und/oder Erschütterungen des Schlosses B (Block G: Erschütterung / Bewegung) auf. Speichermittel des Schlosses B sind in Fig. 3 nicht separat dargestellt.

Das Endgerät A eines Nutzers A ist in Fig. 3 mit Block A gekennzeichnet (Block A: Endgerät des Kunden mit einer APP oder einfache SMS Kommunikation MSISDN1).

Sollte das Schloss B in einer vorteilhaften Ausführungsvariante von mehreren Nutzern oder Endgeräten nutzbar sein, mit mehreren unterschiedlichen Endgeräten bedienbar sein, ist vorteilhafterweise im Mobilfunknetz eine zentrale Einrichtung zur Verwaltung derselben vorgesehen (Block B: Zentrale Verwaltung mehrere Schlösser IDs).

Nachfolgend wird der Betriebsablauf des Schlosses B anhand des Blockdiagrams näher erläutert:
Zur Ersteinrichtung bzw. Verpaarung des Schlosses B mit dem Endgerät A erfolgt eine Verknüpfung der MSISDN1/IMSI1 des Endgerätes A von Block A über das Mobilfunknetz (in Fig. 3 gekennzeichnet durch den mit dem Bezugszeichen K1 versehenen Pfeil) zu Block C, Block D und Block E mit der MSISDN2/IMS12 des Schlosses B.

Block A, also das Endgerät A des Schlosseigentümers bzw. -nutzers, agiert dabei als elektronischer Schlüssel zum Öffnen bzw. Schließen des Schlosses B sowie zum Empfang von Statusmeldungen und/oder Alarmmeldungen.

Für alle An- oder Abmeldungen von Block A bei Block D ist die MSISDN von Block E, also die MSISDN2, und ein weiterer bei der Produktion bzw. Fertigung des Schlosses B zufällig erzeugter Schlüssel bzw. Code erforderlich. Die MSISDN2 und der erzeugte Schlüssel werden dem Schlosseigentümer bzw. -nutzer beim Erwerb des Schlosses B separat mitgeteilt, beispielsweise mittels eines Rubbelfeldes vor Einsichtnahme geschützten Informationsfeldes in der Betriebsanleitung oder dergleichen Wege.

Block A kann nun mit der Kenntnis der MSISDN2 (Block E) und des Schlüssels bzw. Codes sich über das Mobilfunknetz bei Block D als zukünftiger Schlüssel anmelden bzw. authentisieren. Hierzu sendet Block A den Befehl "Anmeldung" in Verbindung mit dem Hash aus der MSISDN2 und dem Schlüssel bzw. Code über das Mobilfunknetz (in Fig. 3 gekennzeichnet durch den mit dem Bezugszeichen K1 versehenen Pfeil) und Block C an den Block D. Block D berechnet ebenfalls den Hash aus dem Schlüssel bzw. Code und der eigenen MSISDN2. Stimmt dieser Hash mit dem übermittelten Hash überein, nimmt Block D des Schlosses B zukünftig die Steuerungen von Block A/MSISDN1 entgegen und sendet Informationen oder Alarme an die MSISDN1.

Ein Verriegeln bzw. Entriegeln des Schlosses B ist wie folgt gegeben:
Zum Verriegeln sendet der Block A den Befehl "verriegeln" (wobei der Befehl mitunter durch eine Kennung repräsentiert wird) in Verbindung mit einem Hash aus der MSISDN2 und dem Schlüssel bzw. Code über das Mobilfunknetz (in Fig. 3 gekennzeichnet durch den mit dem Bezugszeichen K1 versehenen Pfeil) und Block C an den Block D. Block D berechnet ebenfalls den Hash aus dem Schlüssel bzw. Code und der eigenen MSISDN2. Stimmt dieser Hash mit dem übermittelten Hash überein, verriegelt Block I über den Block F und aktiviert die Blöcke G, H und J.

Zum Entriegeln sendet der Block A den Befehl "entriegeln" (wobei der Befehl mitunter durch eine Kennung repräsentiert wird) in Verbindung mit einem Hash aus der MSISDN2 und dem Schlüssel bzw. Code über das Mobilfunknetz (in Fig. 3 gekennzeichnet durch den mit dem Bezugszeichen K1 versehenen Pfeil) und Block C an den Block D. Block D berechnet ebenfalls den Hash aus dem Schlüssel bzw. Code und der eigenen MSISDN2. Stimmt dieser Hash mit dem übermittelten Hash überein, wird der Block I über den Block F entriegelt und die Blöcke G, H und J werden deaktiviert.

Weitere Steuerbefehle sind nach demselben Schema vorgesehen zur Aktivierung bzw. Deaktivierung der Funktionen von Block G, Block H, Block I und Block J:
Zum Aktivieren einer Funktion sendet der Block A den Befehl "aktiviere Funktion X" (wobei der Befehl mitunter durch eine Kennung repräsentiert wird) in Verbindung mit einem Hash aus der MSISDN2 und dem Schlüssel bzw. Code über das Mobilfunknetz (in Fig. 3 gekennzeichnet durch den mit dem Bezugszeichen K1 versehenen Pfeil) und Block C an den Block D. Block D berechnet ebenfalls den Hash aus dem Schlüssel bzw. Code und der eigenen MSISDN2. Stimmt dieser Hash mit dem übermittelten Hash überein, wird der Befehl "aktiviere Funktion X" von dem Block D über den Block F gesendet und die Blöcke G, H und J werden aktiviert.

Zum Deaktivieren einer Funktion sendet der Block A den Befehl "deaktiviere Funktion X" (wobei der Befehl mitunter durch eine Kennung repräsentiert wird) in Verbindung mit einem Hash aus der MSISDN2 und dem Schlüssel bzw. Code über das Mobilfunknetz (in Fig. 3 gekennzeichnet durch den mit dem Bezugszeichen K1 versehenen Pfeil) und Block C an den Block D. Block D berechnet ebenfalls den Hash aus dem Schlüssel bzw. Code und der eigenen MSISDN2. Stimmt dieser Hash mit dem übermittelten Hash überein, wird der Befehl "deaktiviere Funktion X" von dem Block D über den Block F gesendet und die Blöcke G, H und J werden deaktiviert.

Zum Überwachen bzw. Abfragen von Statusinformationen von Funktionen muss wenigstens eine der Funktionen gemäß den Blöcken G, H, I oder J des Schlosses B aktiviert sein.

Wenn sich der Zustand eines Blocks G, H, I oder J ändert, wird diese Information als Alarm bzw. Alarmmeldung über den Block C des Schlosses B und das Mobilfunknetz (in Fig. 3 gekennzeichnet durch den mit dem Bezugszeichen K1 versehenen Pfeil) an den Block A übermittelt. Hierzu sendet Block D ein Datagramm mit allen verfügbaren Informationen an den Block A. Der Inhalt des Datagramms und Auslösegrund sind dabei der Status von Block G, der Status von Block H, der Status von Block I und/oder der Status von Block J. Der Status kann dabei Informationen über das Schloss B allgemein, den Status einer Energieversorgung des Schlosses B, Statusfehlermeldungen des Schlosses B oder dergleichen umfassen. Jin Abhängigkeit von der durch den Nutzer des Endgerätes A gewählten Überwachung wird das Datagramm nach Alarmauslösung, vorzugsweise periodisch mit einem bestimmten Zeitintervall, gesendet oder nur wenn sich die Information eines der Sensoren der Blöcke G, H, I oder J erneut geändert hat, beispielsweise wenn das mit dem Schloss versehene Fortbewegungsmittel bewegt wird oder dergleichen.

Die in Fig. 3 mit dem Bezugszeichen K1 gekennzeichnete Kommunikation zwischen dem Endgerät A und dem Schloss B unter Verwendung der MSISDN1 des Endgerätes A und der MSISDN2 des Schlosses B erfolgt im einfachsten Fall mittels SMS. Die Kommunikation zwischen dem Endgerät A und dem Schloss B unter Verwendung der MSISDN1 des Endgerätes A und der MSISDN2 des Schlosses B kann aber auch unter Verwendung anderer Protokolle des Mobilfunknetzes erfolgen. Die Eingabe von Steuerbefehlen seitens des Blocks A und die Auswertung bzw. das Auslesen der Datagramme kann vorteilhafterweise durch eine seitens des Endgerätes A ausgeführte Anwendung, ein sogenanntes App, unterstützt werden. So könnte ein Ver- bzw. Entriegeln des Schlosses B erfolgen, wenn der Aufenthaltsort des Nutzers des Endgerätes A mit dem Aufenthaltsort des Schlosses B übereinstimmt bzw. nicht übereinstimmt, oder durch eine SMS als manuelle Aktion durch den Nutzer des Endgerätes A.

Der in Fig. 3 dargestellte Block B stellt eine Plattform zur Verwaltung von erfindungsgemäßen Schlössern dar. Die Kommunikation zwischen dem Endgerät bzw. den Endgeräten und dem Schloss bzw. den Schlössern ändert sich bei Vorhandensein des Blockes B nicht. Block B ermöglicht insbesondere eine parallele Verwaltung von Schlössern Gruppen.

Der in Fig. 3 dargestellte Block D des Schlosses B verwaltet die angeschlossenen Sensoren und die Kommunikation mit dem Block A und/oder dem Block B und überwacht die Sensoren und das daraus abgeleitete Alarmierungsverhalten. Die Logik des Blocks D analysiert dabei die von den Sensoren gemeldeten Werte. Sollten die Werte eine vorbestimmte oder insbesondere durch den Nutzer des Endgerätes A vorgebbare Schwelle überschreiten, wird der Alarm ausgelöst.

Der in Fig. 3 dargestellte Block F des Schlosses B erfüllt zwei Funktionen. Zum einen überwacht er das Schloss auf eine Durchtrennung bzw. gewaltsame Öffnung. Zum anderen entriegelt er auf Befehl von Block D des Schloss B oder verriegelt es wieder.

Der in Fig. 3 dargestellte Block G des Schlosses B ist ein Erschütterungs- bzw. Bewegungssensor. Der Erschütterungs- bzw. Bewegungssensor ist dabei vorteilhafterweise derart konfigurierbar, dass ein leichtes Wackeln des Schlosses B oder am Schloss B nicht zu einem Alarm führt, ein festeres Wackeln jedoch schon. Diese Grenze ist vorteilhafterweise durch den Nutzer des Endgerätes A einstellbar bzw. vorgebbar.

Der in Fig. 3 dargestellte Block H des Schlosses B ist ein GPS-Modul. Vorteilhafterweise ermöglicht das GPS-Modul eine Überwachung einer Veränderung des Aufenthaltsortes des Schlosses B in einem bestimmten, insbesondere durch den Nutzer des Endgerätes A vorgebbaren Bereichs, ein sogenanntes Geo Fencing.

Der in Fig. 3 dargestellte Block I des Schlosses B umfasst das elektromechanische Mittel zum Ver- bzw. Entriegeln des Schlosses B.

Der in Fig. 3 dargestellte Block J des Schlosses B übernimmt eine Überprüfung auf Unterbrechung bzw. Durchtrennung des Schlosses B bzw. dessen Gehäuses.

Die in den Figuren der Zeichnung dargestellten Ausführungsbeispiele der Erfindung und die im Zusammenhang mit diesen erläuterten Ausführungsbeispiele der Erfindung dienen lediglich der Erläuterung der Erfindung und sind für diese nicht beschränkend.

### Bezugszeichenliste:

- A: Nutzer bzw. Endgerät des Nutzers
- B: Schloss
- MSISDN1: Adressierungsinformation (Endgerät A)
- MSISDN2: Adressierungsinformation (Schloss B)
- TC, TC', TC", TC'": Schlüsselinformation
- 11: Verfahrensschritt (Erfassen Hash B (MSISDN2, TC))
- 12: Verfahrensschritt (Senden Hash A (MSISDN1, TC') und Hash B(MSISDN2, TC))
- 13: Verfahrensschritt (Vergleich Hash B (MSISDN2, TC))
- 14: Verfahrensschritt (Speichern Hash A (MSISDN1, TC) und Erstellen TC")
- 15: Verfahrensschritt (Senden TC" und Bestätigung Verpaarung)
- 21: Verfahrensschritt (Bilden/Erzeugen Hash C (MSISDN2, TC"))
- 22: Verfahrensschritt (Senden Hash C (MSISDN2, TC") und Steuerinformation)
- 23: Verfahrensschritt (Auswerten (Vergleich Hash B (MSISDN2, TC)))
- 24: Verfahrensschritt (Umsetzung Steuerinformation)
- 25: Verfahrensschritt (Erstellen und Speichern TC'")
- 26: Verfahrensschritt (Senden TC'")
- 27: Verfahrensschritt (Betätigung Schloss)

## Patentansprüche

1. Verfahren zur Sicherung eines Fortbewegungsmittels gegen unberechtigte Nutzung oder Diebstahl mittels eines Schlosses und eines in einem Mobilfunknetz betreibbaren Endgerätes, mit den folgenden Verfahrensschritten:
a) Empfangen von Daten seitens des Schlosses über das Mobilfunknetz mittels eines Kommunikationsmoduls des Schlosses, wobei die Daten unter Verwendung einer dem Kommunikationsmodul zugeordneten Adressierungsinformation (MSISDN 2) an das Schloss adressiert sind, und wobei die Daten eine Adressierungsinformation (MSISDN 1) eines Endgerätes und eine seitens des Endgerätes gespeicherte Schlüsselinformation (TC') umfassen;
b) Auswerten der von dem Kommunikationsmodul empfangenen Daten seitens einer Recheneinrichtung des Schlosses, wobei eine Vergleichseinheit der Recheneinrichtung die Schlüsselinformation (TC') der empfangenen Daten mit der in einem Speichermittel des Schlosses erfassten Schlüsselinformation (TC) vergleicht;
c) Ausführen eines Steuerbefehls im Falle einer Übereinstimmung der miteinander verglichenen Schlüsselinformationen (TC, TC') seitens der Recheneinrichtung;
d) Erstellen einer neuen Schlüsselinformation (TC") seitens der Recheneinrichtung des Schlosses mittels einer Generierungseinheit der Recheneinrichtung;
e) Speichern der seitens der Generierungseinheit der Recheneinrichtung des Schlosses erstellten neuen Schlüsselinformation (TC") in dem Speichermittel des Schlosses;
f) Senden der neuen Schlüsselinformation (TC") von dem Kommunikationsmodul über das Mobilfunknetz unter Verwendung der Adressierungsinformation (MSISDN 1) des Endgerätes an das Endgerät;
g) Speichern der neuen Schlüsselinformation (TC") seitens des Endgerätes; und
h) Betätigen des Schlosses basierend auf dem Steuerbefehl durch ein elektromechanisches Mittel zum Ver- bzw. Entriegeln des Schlosses, durch
Verschlüsseln von seitens des Schlosses (B) in Steuerbefehle umsetzbaren Steuerinformationen unter Verwendung der seitens des Endgerätes (A) empfangenen neuen Schlüsselinformation (TC") durch das Endgerät (A),
Senden der verschlüsselten Steuerinformationen über das Mobilfunknetz an das Schloss (B), und
Entschlüsseln der empfangenen verschlüsselten Steuerinformationen unter Verwendung der neuen Schlüsselinformation (TC") durch das Schloss (B).

2. Verfahren nach Anspruch 1, **dadurch gekennzeichnet, dass** die von dem Kommunikationsmodul zu versendenden Daten verschlüsselt werden und/oder die von dem Endgerät empfangenen Daten verschlüsselt sind, insbesondere mittels einer Streuwertfunktion.

3. Verfahren nach Anspruch 2, **dadurch gekennzeichnet, dass** die von dem Endgerät empfangenen Daten unter Nutzung der Schlüsselinformation (TC', TC") verschlüsselt sind und die von dem Kommunikationsmodul empfangenen Daten seitens der Recheneinrichtung unter Nutzung der Schlüsselinformation (TC', TC") entschlüsselt werden.

4. Verfahren nach einem der Ansprüche 1 bis 3, **dadurch gekennzeichnet, dass** im Rahmen des Auswertens gemäß Verfahrensschritt b) des Anspruchs 1 die Vergleichseinheit der Recheneinrichtung die Adressierungsinformation (MSISDN 1) der empfangenen Daten mit einer in dem Speichermittel erfassten Adressierungsinformation (MSISDN 1') vergleicht, wobei im Falle einer Übereinstimmung der miteinander verglichenen Adressierungsinformationen (MSISDN 1, MSISDN 1') das Verfahren mit Verfahrensschritt c) des Anspruchs 1 fortgesetzt wird.

5. Verfahren nach einem der Ansprüche 1 bis 4, **dadurch gekennzeichnet, dass** die im Speichermittel des Schlosses erfasste Adressierungsinformation (MSISDN 1') mittels eines Schreibschutzes geschützt werden.

6. Verfahren nach einem der Ansprüche 1 bis 5, **dadurch gekennzeichnet, dass** im Rahmen der Speicherung gemäß Verfahrensschritt e) des Anspruchs 1 das Speichermittel eine zuvor erfasste Schlüsselinformation (TC) mit der neu erstellten Schlüsselinformation (TC") überschreibt.

7. Verfahren nach einem der Ansprüche 1 bis 6, **dadurch gekennzeichnet, dass** die in Verfahrensschritt a) des Anspruchs 1 mittels des Kommunikationsmoduls des Schlosses empfangenen Daten ferner eine Steuerinformation umfassen, und der in Verfahrensschritt c) des Anspruchs 1 auszuführende Steuerbefehl von der Recheneinrichtung aus der Steuerinformation erstellt wird.

8. Verfahren nach einem der Ansprüche 1 bis 7, **gekennzeichnet durch** ein Erfassen einer Statusinformation seitens einer Einrichtung des Schlosses und ein Senden der Statusinformation über das Mobilfunknetz an das Endgerät im Rahmen des Sendens gemäß Verfahrensschritt f) des Anspruchs 1.

9. Verfahren nach Anspruch 8, **dadurch gekennzeichnet, dass** die Statusinformation eine Information einer Einrichtung zur Bestimmung des geographischen Aufenthaltsortes des Schlosses, eine Information einer Einrichtung zur Erkennung von Bewegungen des Schlosses und/oder eine Information einer Einrichtung zur Überwachung einer Manipulation des Schlosses umfasst.

10. Verfahren nach einem der Ansprüche 1 bis 9, **dadurch gekennzeichnet, dass** das Speichermittel des Schlosses zusätzliche Informationen umfasst, insbesondere Informationen hinsichtlich einer IMEI und/oder einer IMSI und/oder einer TMSI des Endgerätes.

11. Verfahren nach Anspruch 10, **dadurch gekennzeichnet, dass** im Rahmen des Auswertens gemäß Verfahrensschritt b) des Anspruchs 1 die die Vergleichseinheit der Recheneinrichtung die zusätzlichen Informationen der in Verfahrensschritt a) des Anspruchs 1 mittels des Kommunikationsmoduls des Schlosses empfangenen Daten mit den im Speichermittel vorhandenen zusätzlichen Informationen vergleicht, wobei im Falle einer Übereinstimmung der miteinander verglichenen zusätzlichen Informationen das Verfahren mit Verfahrensschritt c) des Anspruchs 1 fortgesetzt wird.

12. Schloss zur Sicherung eines Fortbewegungsmittels gegen unberechtigte Nutzung oder Diebstahl, mit
einem in einem Mobilfunknetz betreibbaren Kommunikationsmodul,
einem Speichermittel,
einem elektromechanischen Mittel zum Ver- bzw. Entriegeln des Schlosses, und
einer Recheneinrichtung,
wobei
dem Kommunikationsmodul eine Adressierungsinformation (MSISDN 2) zugeordnet ist und dieses dazu ausgebildet ist, über das Mobilfunknetz Daten zu empfangen und unter Verwendung einer Adressierungsinformation (MSISDN 1) an ein in dem Mobilfunknetz betreibbares Endgerät zu senden,
das Speichermittel eine erfasste Schlüsselinformation (TC) aufweist und dazu ausgebildet ist, eine erstellte neue Schlüsselinformation (TC") abzuspeichern,
das elektromechanische Mittel zum Ver- bzw. Entriegeln dazu ausgebildet ist, basierend auf einem Steuerbefehl das Schloss zu betätigen, und
die Recheneinrichtung dazu ausgebildet ist, die von dem Kommunikationsmodul empfangenen Daten, welche eine Adressierungsinformation (MSISDN 1) und eine Schlüsselinformation (TC') umfassen, mit der in dem Speichermittel erfassten Schlüsselinformation (TC) zu vergleichen, im Falle einer Übereinstimmung der miteinander verglichenen Schlüsselinformationen (TC, TC') einen Steuerbefehl auszuführen und eine neue Schlüsselinformation (TC") zu erstellen,
wobei das Kommunikationsmodul weiter dazu ausgebildet ist, die neue Schlüsselinformation (TC") über das Kommunikationsmodul unter Verwendung der Adressierungsinformation (MSISDN 1) an das Endgerät (A) zu senden,
und wobei
das Kommunikationsmodul ferner dazu ausgebildet ist, mittels der neuen Schlüsselinformation (TC") verschlüsselte Steuerinformationen vom Endgerät (A) zu empfangen, und
die Recheneinrichtung ferner dazu ausgebildet ist, die vom Endgerät (A) empfangenen verschlüsselten Steuerinformationen unter Verwendung der neuen Schlüsselinformation (TC") zu entschlüsseln.

13. Schloss nach Anspruch 12, **dadurch gekennzeichnet, dass** dieses ferner dazu eingerichtet ist, die von dem Kommunikationsmodul zu versendenden Daten zu verschlüsseln, insbesondere mittels einer Streuwertfunktion.

14. Schloss nach Anspruch 12 oder Anspruch 13, **dadurch gekennzeichnet, dass** die Recheneinrichtung dazu eingerichtet ist, einen Vergleich der Adressierungsinformation (MSISDN 1) empfangener Daten mit einer im Speichermittel erfassten Adressierungsinformation (MSISDN 1') durchzuführen, und das Schloss dazu eingerichtet ist, im Falle einer Übereinstimmung der miteinander verglichenen Adressierungsinformationen (MSISDN 1, MSISDN 1') seitens der Recheneinrichtung einen Steuerbefehl auszuführen.

15. Schloss nach einem der Ansprüche 12 bis 14, **dadurch gekennzeichnet, dass** dieses dazu eingerichtet ist, die im Speichermittel erfasste Adressierungsinformation (MSISDN 1') mittels eines Schreibschutzes zu schützen.

16. Schloss nach einem der Ansprüche 12 bis 15, **dadurch gekennzeichnet, dass** die dem Kommunikationsmodul zugeordnete Adressierungsinformation (MSISDN 2) eine MSISDN ist.

17. Schloss nach einem der Ansprüche 12 bis 16, **dadurch gekennzeichnet, dass** dieses dazu eingerichtet ist, die im Speichermittel vorhandene Schlüsselinformation (TC) mit der neuen Schlüsselinformation (TC") zu überschreiben.

18. Schloss nach einem der Ansprüche 12 bis 17, **dadurch gekennzeichnet, dass** dieses eine Einrichtung zur Bestimmung des geographischen Aufenthaltsortes des Schlosses, eine Einrichtung zur Erkennung von Bewegungen des Schlosses und/oder eine Einrichtung zur Überwachung einer Manipulation des Schlosses aufweist.

19. Schloss nach Anspruch 18, **dadurch gekennzeichnet, dass** dieses dazu eingerichtet ist, mittels der Einrichtung zur Bestimmung des geographischen Aufenthaltsortes des Schlosses, mittels der Einrichtung zur Erkennung von Bewegungen des Schlosses und/oder mittels der Einrichtung zur Überwachung einer Manipulation des Schlosses eine Steuerinformation, welche in einen Steuerbefehl umgesetzt wird, und/oder eine Statusinformation zu erstellen.

20. Schloss nach einem der Ansprüche 12 bis 19, **dadurch gekennzeichnet, dass** das Schloss eine Energieversorgungseinrichtung aufweist, wobei die Energieversorgungseinrichtung, wobei das Schloss ferner dazu eingerichtet ist, die Energieversorgungseinrichtung über einen Dynamo und/oder eine Solarvorrichtung aufzuladen.

21. Schloss nach einem der Ansprüche 12 bis 20, **dadurch gekennzeichnet, dass** dieses ausgebildet und/oder eingerichtet ist, die seitens des Schlosses auszuführenden Verfahrensschritte eines Verfahrens nach einem der Ansprüche 1 bis 11 auszuführen.

22. Endgerät zur Sicherung eines Fortbewegungsmittels gegen unberechtigte Nutzung oder Diebstahl, wobei das Endgerät zum Betrieb in einem Mobilfunknetz ausgebildet ist, dem Endgerät eine Adressierungsinformation (MSISDN 1) zugeordnet ist, und das Endgerät ferner dazu eingerichtet ist, Daten, welche die Adressierungsinformation (MSISDN 1) des Endgerätes und eine seitens des Endgerätes gespeicherte Schlüsselinformation (TC') umfassen, über das Mobilfunknetz unter Verwendung einer einem Schloss nach einem der Ansprüche 12 bis 21 zugeordnete Adressierungsinformation (MSISDN 2) an das Schloss zu senden, und
Daten, welche eine seitens des Schlosses mittels einer Generierungseinheit einer Recheneinrichtung des Schlosses erstellte neue Schlüsselinformation (TC") enthalten, über das Mobilfunknetz zu empfangen, und die neue Schlüsselinformation zu speichern, und wobei
das Endgerät ferner dazu eingerichtet ist,
von seitens des Schlosses (B) in Steuerbefehle umsetzbare Steuerinformationen unter Verwendung der seitens des Endgerätes (A) empfangenen neuen Schlüsselinformation (TC") zu verschlüsseln, und die verschlüsselten Steuerinformationen über das Mobilfunknetz an das Schloss (B) zu senden.

23. Endgerät nach Anspruch 22, **dadurch gekennzeichnet, dass** dieses ferner dazu eingerichtet ist, die von diesem zu versendende Daten zu verschlüsseln, insbesondere mittels einer Hash-Funktion.

24. Endgerät nach Anspruch 23, **dadurch gekennzeichnet, dass** dieses ferner dazu eingerichtet ist, die zu versendenden Daten unter Nutzung der Schlüsselinformation (TC', TC") zu verschlüsseln.

25. Endgerät nach einem der Ansprüche 22 bis 24, **dadurch gekennzeichnet, dass** die Adressierungsinformation (MSISDN 1) des Endgerätes eine MSISDN ist.

26. Endgerät nach einem der Ansprüche 22 bis 25, **dadurch gekennzeichnet, dass** die über das Mobilfunknetz zu versendenden Daten eine Steuerinformation, welche in einen Steuerbefehl umgesetzt wird, und/oder zusätzliche Informationen umfassen.

27. Endgerät nach einem der Ansprüche 22 bis 26, **dadurch gekennzeichnet, dass** dieses ferner dazu eingerichtet ist, über das Mobilfunknetz Daten zu empfangen, welche eine Statusinformation umfassen.

28. Endgerät nach einem der Ansprüche 22 bis 28, **dadurch gekennzeichnet, dass** dieses ausgebildet und/oder eingerichtet ist, die seitens des Endgerätes auszuführenden Verfahrensschritte eines Verfahrens nach einem der Ansprüche 1 bis 11 auszuführen.

## Claims

1. A method for securing a transportation means against unauthorised use or theft by means of a lock and a terminal that can be operated in a mobile radio network, comprising the following process steps:
a) receiving data by the lock via the mobile radio network by means of a communication module of the lock, wherein the data are addressed to the lock using an addressing information item (MSISDN 2) assigned to the communication module, and wherein the data comprise an addressing information item (MSISDN 1) of a terminal and a key information item (TC') stored by the terminal;
b) evaluating the data received by the communication module by means of a computer unit of the lock, wherein a comparison unit of the computer unit compares the key information item (TC') of the received data with the key information item (TC) gathered in a storage means of the lock;
c) executing a control command by means of the computer unit in case of a concordance of the key information items (TC, TC') that have been compared with each other;
d) creating a new key information item (TC") by the computer unit of the lock by means of a generation unit of the computer unit;
e) storing the new key information item (TC") created by the generation unit of the computer unit of the lock in the storage means of the lock;
f) sending the new key information item (TC") from the communication module via the mobile radio network using the addressing information item (MSISDN 1) of the terminal to the terminal;
g) storing the new key information item (TC") by the terminal; and
h) actuating the lock on the base of the control command by an electromechanical means for locking or unlocking the lock, by
encoding control information that can be turned into control commands by the lock (B) using the new key information item (TC") received by the terminal by means of the terminal (A),
sending the encoded control information via the mobile radio network to the lock (B), and
decoding the received encoded control information while using the new key information item (TC") by the lock (B).

2. A method according to claim 1, **characterized in that** the data to be sent by the communication module will be encoded and/or the data received by the terminal are encoded, in particular by means of a variance coefficient function.

3. A method according to claim 2, **characterized in that** the data received by the terminal are encoded by using the key information item (TC', TC") and the data received by the communication module will be decoded by the computer unit using the key information item (TC', TC").

4. A method according to one of the claims 1 to 3, **characterized in that** within the scope of the evaluation according to process step b) of claim 1, the comparison unit of the computer unit compares the addressing information item (MSISDN 1) of the received data with an addressing information item (MSISDN 1') gathered in the storage means, wherein in case of a concordance of the addressing information items (MSISDN 1, MSISDN 1') which have been compared with each other, the process will be continued with process step c) of claim 1.

5. A method according to one of the claims 1 to 4, **characterized in that** the addressing information item (MSISDN 1') gathered in the storage means of the lock will be protected by means of a write protection.

6. A method according to one of the claims 1 to 5, **characterized in that** within the scope of the storing according to process step e) of claim 1, the storage means overwrites a previously gathered key information item (TC) with the newly created key information item (TC").

7. A method according to one of the claims 1 to 6, **characterized in that** the data received in process step a) of claim 1 by means of the communication module of the lock furthermore comprise a control information item, and the control command to be executed in process step c) of claim 1 will be created by the computer unit on the base of the control information item.

8. A method according to one of the claims 1 to 7, **characterized by** a gathering of a status information item by means of a device of the lock and a sending operation of the status information item via the mobile radio network to the terminal in the scope of the sending operation according to process step f) of claim 1.

9. A method according to claim 8, **characterized in that** the status information item comprises an information item of a device for determining the geographical position of the lock, an information item of a device for recognizing movements of the lock and/or an information item of a device for monitoring a manipulation of the lock.

10. A method according to one of the claims 1 to 9, **characterized in that** the storage means of the lock comprises additional information, in particular information with respect to an IMEI and/or an IMSI and/or a TMSI of the terminal.

11. A method according to claim 10, **characterized in that** in the scope of the evaluation according to process step b) of claim 1 the comparison unit of the computer unit compares the additional information of the data received in process step a) of claim 1 by means of the communication module of the lock with additional information present in the storage means, wherein in case of a concordance of the additional information which has been compared with each other, the process will be continued with process step c) of claim 1.

12. A lock for securing a transportation means against unauthorised use or theft, comprising
a communication module that can be operated in a mobile radio network,
a storage means
an electromechanical means for locking or unlocking the lock, and
a computer unit,
wherein
an addressing information item (MSISDN 2) is assigned to the communication module and this one is configured to receive data via the mobile radio network and to send them to a terminal that can be operated in the mobile radio network while using an addressing information item (MSISDN 1),
the storage means comprises a gathered key information item (TC) and is configured to store a newly created key information item (TC"),
the electromechanical means for locking or unlocking is configured to actuate the lock on the base of a control command, and
the computer unit is configured to compare the data received from the communication module, which data comprise an addressing information item (MSISDN 1) and a key information item (TC'), with the key information item (TC) gathered in the storage means, in case of a concordance of the key information items (TC, TC') compared with each other to execute a control command and to create a new key information item (TC"),
wherein the communication module is furthermore configured to send the new key information item (TC") via the communication module using the addressing information item (MSISDN 1) to the terminal (A),
and wherein
the communication module is furthermore configured to receive control information encoded by means of the new key information item (TC") from the terminal (A), and
the computer unit is furthermore configured to decode the encoded control information received from the terminal (A) using the new key information item (TC").

13. A lock according to claim 12, **characterized in that** this one is furthermore configured for encoding the data to be sent by the communication module, in particular by means of a variance coefficient function.

14. A lock according to claim 12 or claim 13, **characterized in that** the computer unit is adapted to carry out a comparison of the addressing information item (MSISDN 1) of received data with an addressing information item (MSISDN 1') gathered in the storage means, and the lock is adapted to carry out a control command by the computer unit in case of a concordance of the addressing information items (MSISDN 1, MSISDN 1') which have been compared with each other.

15. A lock according to one of the claims 12 to 14, **characterized in that** this one is adapted to protect the addressing information item (MSISDN 1') gathered in the storage means by means of a write protection.

16. A lock according to one of the claims 12 to 15, **characterized in that** the addressing information item (MSISDN 2) assigned to the communication module is an MSISDN.

17. A lock according to one of the claims 12 to 16, **characterized in that** this one is adapted to overwrite the key information item (TC) present in the storage means with the new key information item (TC").

18. A lock according to one of the claims 12 to 17, **characterized in that** this one comprises a device for determining the geographical position of the lock, a device for recognizing movements of the lock and/or a device for monitoring a manipulation of the lock.

19. A lock according to claim 18, **characterized in that** this one is adapted to create a control information item which is converted into a control command and/or a status information item by means of the device for determining the geographical position of the lock, by means of the device for recognizing movements of the lock and/or by means of the device for monitoring a manipulation of the lock.

20. A lock according to one of the claims 12 to 19, **characterized in that** the lock comprises an energy supply device, wherein the lock is furthermore adapted to charge the energy supply device via a dynamo and/or a solar device.

21. A lock according to one of the claims 12 to 20, **characterized in that** this one is configured and/or adapted to carry out the process steps of a method according to one of the claims 1 to 11, the process steps being executable by means of the lock.

22. A terminal for securing a transportation means against unauthorised use or theft, wherein the terminal is configured for being operated in a mobile radio network, an addressing information item (MSISDN 1) is assigned to the terminal and the terminal is furthermore adapted to send data which comprise the addressing information item (MSISDN 1) of the terminal and a key information item (TC') stored by the terminal via the mobile radio network to the lock using an addressing information item (MSISDN 2) assigned to a lock according to one of the claims 12 to 21, and
to receive data which contain a key information item (TC") which has been newly created by the lock by means of a generation unit of the computer unit of the lock via the mobile radio network and to store the new key information item,
and wherein
the terminal is furthermore adapted to
encode control information that can be turned into control commands by the lock (B) using the new key information item (TC") received by the terminal (A), and
send the encoded control information via the mobile radio network to the lock (B).

23. A terminal according to claim 22, **characterized in that** this one is furthermore adapted to encode the data which are to be sent by this one, in particular by means of a hash function.

24. A terminal according to claim 23, **characterized in that** this one is furthermore adapted to encode the data which are to be sent using the key information item (TC', TC").

25. A terminal according to one of the claims 22 to 24, **characterized in that** the addressing information item (MSISDN 1) of the terminal is an MSISDN.

26. A terminal according to one of the claims 22 to 25, **characterized in that** the data to be sent via the mobile radio network comprise a control information item, which is converted into a control command, and/or additional information.

27. A terminal according to one of the claims 22 to 26, **characterized in that** this one is furthermore adapted to receive data via the mobile radio network, which data comprise a status information item.

28. A terminal according to one of the claims 22 to 28, **characterized in that** this one is configured and/or adapted to carry out the process steps of a method according to one of the claims 1 through 11, the process steps being executable by means of the terminal.

## Revendications

1. Procédé de sécurisation d'un moyen de transport contre l'utilisation non-autorisée ou le vol par moyen d'une serrure et d'un terminal fonctionnant dans un réseau radio mobile, comprenant les étapes de procédé suivantes de:
a) recevoir des données par la serrure via le réseau radio mobile par moyen d'un module de communication de la serrure, les données étant adressées à la serrure en utilisant une information d'adressage (MSISDN 2) attribuée au module de communication, et les données comprenant une information d'adressage (MSISDN 1) d'un terminal et une information de clé (TC') stockée par le terminal;
b) évaluer les données reçues par le module de communication par moyen d'un moyen de calcul de la serrure, dans lequel une unité de comparaison du moyen de calcul compare l'information de clé (TC') des données reçues avec l'information de clé (TC) saisie dans un moyen de stockage de la serrure;
c) exécuter une commande de contrôle par le moyen de calcul dans le cas d'une concordance des informations de clé (TC, TC'), qui ont été comparées l'une avec l'autre;
d) créer une nouvelle information de clé (TC") par le moyen de calcul de la serrure par moyen d'une unité de génération du moyen de calcul;
e) stocker la nouvelle information de clé (TC") générée par moyen de l'unité de génération du moyen de calcul de la serrure dans le moyen de stockage de la serrure;
f) envoyer la nouvelle information de clé (TC") du module de communication via le réseau radio mobile au terminal en utilisant l'information d'adressage (MSISDN 1) du terminal;
g) stocker la nouvelle information de clé (TC") par le terminal; et
h) actionner la serrure sur la base de la commande de contrôle à l'aide d'un moyen électromécanique destiné au verrouillage ou au déverrouillage de la serrure en exécutant les étapes de
crypter des informations de commande pouvant être transformées en commandes de contrôle par la serrure (B) en utilisant la nouvelle information de clé (TC") reçue par le terminal (A) par le terminal (A),
envoyer les informations de commande cryptées via le réseau radio mobile à la serrure (B), et
décoder les informations de commande cryptées reçues en utilisant la nouvelle information de clé (TC") par la serrure (B).

2. Procédé selon la revendication 1, **caractérisé en ce que** les données à envoyer par le module de communication sont cryptées et/ou les données reçues par le terminal sont cryptées, notamment par moyen d'une fonction de valeurs d'éparpillement.

3. Procédé selon la revendication 2, **caractérisé en ce que** les données reçues par le terminal sont cryptées en utilisant l'information de clé (TC', TC") et les données reçues par le module de communication sont décodées par le moyen de calcul en utilisant l'information de clé (TC', TC").

4. Procédé selon l'une des revendications 1 à 3, **caractérisé en ce que** dans le cadre de l'évaluation selon l'étape de procédé b) de la revendication 1 l'unité de comparaison du moyen de calcul compare l'information d'adressage (MSISDN 1) des données reçues avec une information d'adressage (MSISDN 1') saisie dans le moyen de stockage, dans lequel dans le cas d'une concordance des informations d'adressage (MSISDN 1, MSISDN 1') comparées l'une avec l'autre le procédé est continué avec l'étape de procédé c) de la revendication 1.

5. Procédé selon l'une des revendications 1 à 4, **caractérisé en ce que** l'information d'adressage (MSISDN 1') saisie dans le moyen de stockage de la serrure est protégée par moyen d'une protection en écriture.

6. Procédé selon l'une des revendications 1 à 5, **caractérisé en ce que** dans le cadre de la mémorisation selon l'étape de procédé e) de la revendication 1 le moyen de stockage écrase une information de clé (TV) précédemment saisie avec l'information de clé (TC") nouvellement créée.

7. Procédé selon l'une des revendications 1 à 6, **caractérisé en ce que** les données reçues par moyen du module de communication de la serrure dans l'étape de procédé a) de la revendication 1 comprennent en outre une information de commande, et la commande de contrôle à exécuter dans l'étape de procédé c) de la revendication 1 est créée par le moyen de calcul à partir de l'information de commande.

8. Procédé selon l'une des revendications 1 à 7, **caractérisé par** une saisie d'une information de statut par un dispositif de la serrure et un envoi de l'information de statut via le réseau radio mobile au terminal dans le cadre de l'envoi selon l'étape de procédé f) de la revendication 1.

9. Procédé selon la revendication 8, **caractérisé en ce que** l'information de statut comprend une information d'un dispositif destiné à déterminer la position géographique de la serrure, une information d'un dispositif destiné à reconnaître des mouvements de la serrure et/ou une information d'un dispositif destiné à surveiller une manipulation de la serrure.

10. Procédé selon l'une des revendications 1 à 9, **caractérisé en ce que** le moyen de stockage de la serrure comprend des informations supplémentaires, notamment des informations par rapport à une IMEI et/ou une IMSI et/ou une TMSI du terminal.

11. Procédé selon la revendication 10, **caractérisé en ce que** dans le cadre de l'évaluation selon l'étape de procédé b) de la revendication 1 l'unité de comparaison du moyen de calcul compare les informations supplémentaires des données reçues par moyen du module de communication de la serrure dans l'étape de procédé a) de la revendication 1 avec les informations supplémentaires présentes dans le moyen de stockage, dans lequel dans le cas d'une concordance des informations supplémentaires comparées les unes avec les autres le procédé est continué avec l'étape de procédé c) de la revendication 1.

12. Serrure pour la sécurisation d'un moyen de transport contre l'utilisation non-autorisée ou le vol, comprenant
un module de communication fonctionnant dans un réseau radio mobile,
un moyen de stockage
un moyen électromécanique destiné au verrouillage ou au déverrouillage de la serrure et
un moyen de calcul,
dans lequel
une information d'adressage (MSISDN 2) est attribuée au module de communication et celui-ci est configuré pour recevoir des données via le réseau radio mobile et pour les envoyer à un terminal fonctionnant dans le réseau radio mobile en utilisant une information d'adressage (MSISDN 1),
le moyen de stockage comprend une information de clé (TC) saisie et il est configuré pour mémoriser une information de clé (TC") nouvellement créée, le moyen électromécanique destiné au verrouillage ou au déverrouillage est configuré pour actionner la serrure sur la base d'une commande de contrôle, et
le moyen de calcul est configuré pour comparer les données reçues par le module de communication, lesquelles données comprennent une information d'adressage (MSISDN 1) et une information de clé (TC'), avec l'information de clé (TC) saisie dans le moyen de stockage, pour exécuter une commande de contrôle et pour créer une nouvelle information de clé (TC") dans le cas d'une concordance des informations de clé (TC, TC'), qui ont été comparées les unes avec les autres,
dans lequel le module de communication est en outre configuré pour envoyer la nouvelle information de clé (TC") via le module de communication au terminal (A) en utilisant l'information d'adressage (MSISDN 1),
et dans lequel
le module de communication est en outre configuré pour recevoir des informations de commande cryptées du terminal par moyen de la nouvelle information de clé (TC"), et
le moyen de calcul est en outre configuré pour décoder les informations de commande cryptées reçues du terminal (A) en utilisant la nouvelle information de clé (TC").

13. Serrure selon la revendication 12, **caractérisée en ce que** celle-ci est en outre adaptée à crypter les données à envoyer par le module de communication, notamment par moyen d'une fonction de valeurs d'éparpillement.

14. Serrure selon la revendication 12 ou la revendication 13, **caractérisée en ce que** le moyen de calcul est configuré pour exécuter une comparaison de l'information d'adressage (MSISDN 1) des données reçues avec une information d'adressage (MSISDN 1') saisie dans le moyen de stockage, et la serrure est adaptée à exécuter une commande de contrôle à l'aide du moyen de calcul dans le cas d'une concordance des informations d'adressage (MSISDN 1, MSISDN 1') comparées l'une avec l'autre.

15. Serrure selon l'une des revendications 12 à 14, **caractérisée en ce que** celle-ci est adaptée à protéger l'information d'adressage (MSISDN 1') saisie dans le moyen de stockage par moyen d'une protection en écriture.

16. Serrure selon l'une des revendications 12 à 15, **caractérisée en ce que** l'information d'adressage (MSISDN 2) attribuée au module de communication est une MSISDN.

17. Serrure selon l'une des revendications 12 à 16, **caractérisée en ce que** celle-ci est adaptée à écraser l'information de clé (TC) présente dans le moyen de stockage avec la nouvelle information de clé (TC").

18. Serrure selon l'une des revendications 12 à 17, **caractérisée en ce que** celle-ci comprend un dispositif destiné à déterminer la position géographique de la serrure, un dispositif destiné à reconnaître des mouvements de la serrure et/ou un dispositif destiné à surveiller une manipulation de la serrure.

19. Serrure selon la revendication 18, **caractérisée en ce que** celle-ci est adaptée à créer une information de commande, qui est transformée en une commande de contrôle, et/ou une information de statut par moyen du dispositif destiné à déterminer la position géographique de la serrure, par moyen du dispositif destiné à reconnaître des mouvements de la serrure et/ou par moyen du dispositif destiné à surveiller une manipulation de la serrure.

20. Serrure selon l'une des revendications 12 à 19, **caractérisée en ce que** la serrure comprend un dispositif d'alimentation en énergie, dans lequel la serrure est en outre adaptée à charger le dispositif d'alimentation en énergie par une dynamo et/ou par un dispositif solaire.

21. Serrure selon l'une des revendications 12 à 20, **caractérisée en ce que** celle-ci est configurée pour et/ou adaptée à exécuter les étapes de procédé d'un procédé selon l'une des revendications 1 à 11, les étapes de procédé étant à exécuter par moyen de la serrure.

22. Terminal pour la sécurisation d'un moyen de transport contre l'utilisation non-autorisée ou le vol, le terminal étant configuré pour le fonctionnement dans un réseau radio mobile, une information d'adressage (MSISDN 1) étant attribuée au terminal et le terminal étant en outre adapté à envoyer des données, qui comprennent l'information d'adressage (MSISDN 1) du terminal et une information de clé (TC') stockée par le terminal, via le réseau radio mobile à la serrure en utilisant une information d'adressage (MSISDN 2) attribuée à une serrure selon l'une des revendications 12 à 21, et
à recevoir des données, qui contiennent une nouvelle information de clé (TC") générée par la serrure par moyen d'une unité de génération d'un moyen de calcul de la serrure, via le réseau radio mobile et à stocker la nouvelle information de clé,
et dans lequel
le terminal est en outre adapté à
crypter des informations de commande pouvant être transformées en commandes de contrôle par la serrure (B) en utilisant les nouvelles informations de clé (TC") reçues par le terminal (A), et
envoyer les informations de commande cryptées via le réseau radio mobile à la serrure (B).

23. Terminal selon la revendication 22, **caractérisé en ce que** celui-ci est en outre adapté à crypter les données à envoyer par celui-ci, notamment par moyen d'une fonction de hachage.

24. Terminal selon la revendication 23, **caractérisé en ce que** celui-ci est en outre adapté à crypter les données à envoyer en utilisant l'information de clé (TC', TC").

25. Terminal selon l'une des revendications 22 à 24, **caractérisé en ce que** l'information d'adressage (MSISDN 1) du terminal est une MSISDN.

26. Terminal selon l'une des revendications 22 à 25, **caractérisé en ce que** les données à envoyer via le réseau radio mobile comprennent une information de commande, qui est transformée en une commande de contrôle, et/ou des informations supplémentaires.

27. Terminal selon l'une des revendications 22 à 26, **caractérisé en ce que** celui-ci est en outre adapté à recevoir des données via le réseau radio mobile, lesquelles données comprennent une information de statut.

28. Terminal selon l'une des revendications 22 à 28, **caractérisé en ce que** celui-ci est configuré pour et/ou adapté à exécuter les étapes de procédé d'un procédé selon l'une des revendications 1 à 11, les étapes de procédé étant exécutables par le terminal.
